# EUROPEAN PATENT APPLICATION

(11) **EP 1 577 189 A1**
(43) Date of publication of application: **21.09.2005**
(21) Application number: 04251474.5
(22) Date of filing: 15.03.2004
(51) Int. Cl.: B62B 7/06, B60B 33/02

(54) **Stroller with means for limiting direction of a wheel**

(71) Applicant: Lan, Red, Taipei Hsien (TW)
(72) Inventor: Lan, Red, Taipei Hsien (TW)
(74) Representative: Molyneaux, Martyn William

(57) **Abstract**

A stroller has a direction-limiting device (4) including a direction-limiting element (43) movable relative to a stroller frame (1) between a limiting position, where the direction-limiting element (43) is inserted into a limiting hole (214) in a wheel-supporting member (21) of a wheel unit (2) so as to prevent rotation of the wheel-supporting member (21) relative to the stroller frame (1), and a release position, where the direction-limiting element (43) is removed from the limiting hole (214) so as to permit the rotation of the wheel-supporting member (21) relative to the stroller frame (1) . A control device (5) includes an adjusting member (51) disposed on an upper portion of a handle unit (11) of the stroller frame (1), and a pull cord (54) disposed between the adjusting member (51) and the direction-limiting element (43). The adjusting member (51) is operable to move the direction-limiting element (43) between the limiting position and the release position.

## Description

This invention relates to a stroller, and more particularly to a stroller with means for limiting the direction of a wheel.

A front wheel of a conventional stroller is provided with a direction-limiting device that can be operated to permit change of the direction of the front wheel. However, the direction-limiting device is disposed typically on a bottom of a stroller frame of the stroller. Thus, when it is desired to change the direction of the front wheel, the user has to bend down so as to operate the direction-limiting device, thereby resulting in difficulties during use.

The object of this invention is to provide a stroller that includes a direction-limiting device, which can be operated easily to change the direction of a wheel.

According to this invention, a stroller has a direction-limiting device including a direction-limiting element movable relative to a stroller frame between a limiting position, where the direction-limiting element is inserted into a limiting hole in a wheel-supporting member of a wheel unit so as to prevent rotation of the wheel-supporting member relative to the stroller frame, and a release position, where the direction-limiting element is removed from the limiting hole so as to permit the rotation of the wheel-supporting member relative to the stroller frame. A control device includes an adjusting member disposed on an upper portion of a handle unit of the stroller frame, and a pull cord disposed between the adjusting member and the direction-limiting element. The adjusting member is operable to move the direction-limiting element between the limiting position and the release position. Because the adjusting member is disposed on the upper portion of the handle unit, it can be operated easily.

These and other features and advantages of this invention will become apparent in the following detailed description of the preferred embodiments of this invention, with reference to the accompanying drawings, in which:
Fig. 1 is a perspective view of the first preferred embodiment of a stroller according to this invention;
Fig. 2 is a partly exploded perspective view of a mounting seat and a direction-limiting device of the first preferred embodiment;
Fig. 3 is a partly exploded perspective view of a right wheel rod and a control device of the first preferred embodiment;
Fig. 4 is a fragmentary, assembled perspective view of the mounting seat, the direction-limiting device, and a wheel unit of the first preferred embodiment;
Fig. 5 is a schematic fragmentary bottom view of the first preferred embodiment, illustrating how a pull cord is mounted on the stroller;
Fig. 6 is a fragmentary sectional view of the first preferred embodiment, illustrating how an adjusting member of the control device is disposed at a lower limit position;
Fig. 7 is a fragmentary, partly exploded side view of the first preferred embodiment, illustrating how a direction-limiting element is disposed at a limiting position;
Fig. 8 is a fragmentary, partly exploded side view of the first preferred embodiment, illustrating how the direction-limiting element is disposed at a release position;
Fig. 9 is a fragmentary sectional view of the first preferred embodiment, illustrating how the adjusting member is disposed at an upper limit position;
Fig. 10 is a fragmentary side view of the second preferred embodiment of a stroller according to this invention, illustrating how an adjusting member is disposed at a first position; and
Fig. 11 is a fragmentary side view of the second preferred embodiment, illustrating how the adjusting member is disposed at a second position.

Before the present invention is described in greater detail in connection with the preferred embodiments, it should be noted that similar elements and structures are designated by like reference numerals throughout the entire disclosure.

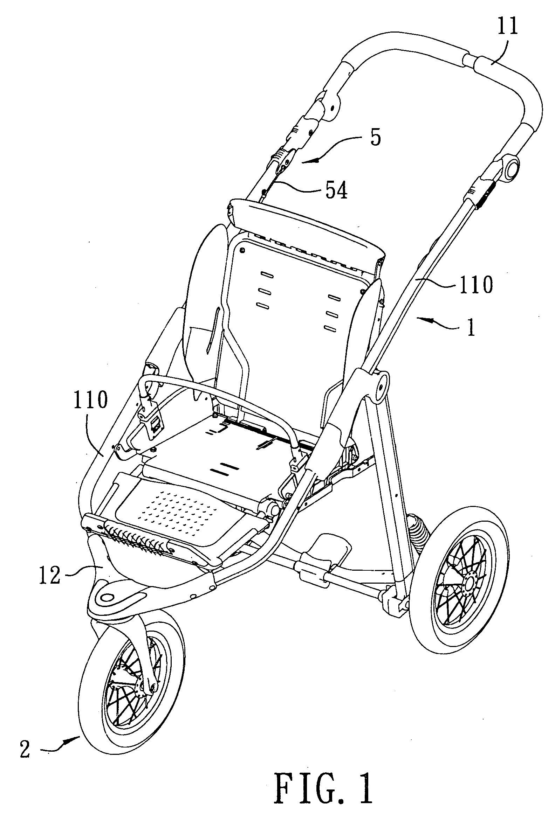

Referring to Figs. 1, 2, and 3, the first preferred embodiment of a stroller according to this invention is shown to include a stroller frame 1, a wheel unit 2, a direction-limiting device 4, and a control device 5.

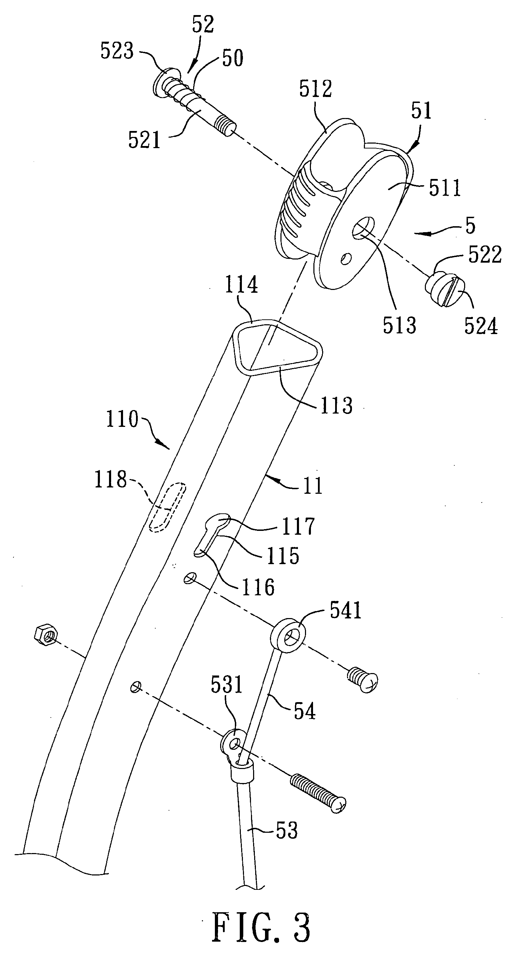

The stroller frame 1 includes a handle unit 11, a wheel seat 12 connected fixedly to a front lower portion of the handle unit 11, and a mounting seat 13 disposed below and connected fixedly to the wheel seat 12. The handle unit 11 includes a pair of aligned left and right wheel rods 110. The right wheel rod 110 (see Fig. 3) is tubular, and is formed with opposite inner and outer walls 113, 114 that are parallel to each other. The inner wall 113 is formed with a positioning slot 115 therethrough, which has a uniform-diameter lower slot portion 116 and a circular upper slot portion 117. The uniform-diameter lower slot portion 116 has an upper end coupled with a lower end of the circular upper slot portion 117, and a width smaller than the diameter of the circular upper slot portion 117. The outer wall 114 is formed with a slide slot 118 therethrough, which is aligned with the positioning slot 115 in the inner wall 113.

The mounting seat 13 has a base wall 131, a surrounding wall 132 extending integrally and downwardly from the base wall 131, a horizontal mounting plate 133 formed integrally with a rear end of the base wall 131 and having a hole 134 formed therethrough and a notch 135. The hole 134 is located in front of the notch 135 and behind the base wall 131.

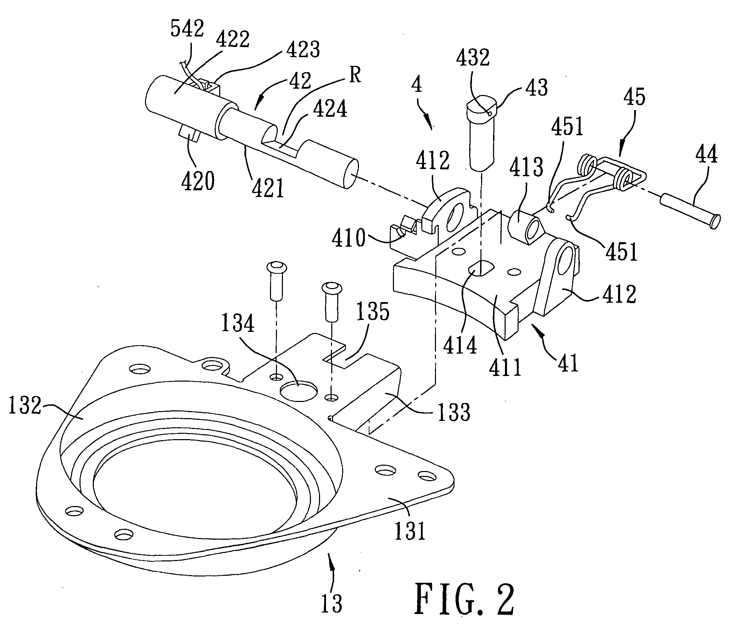

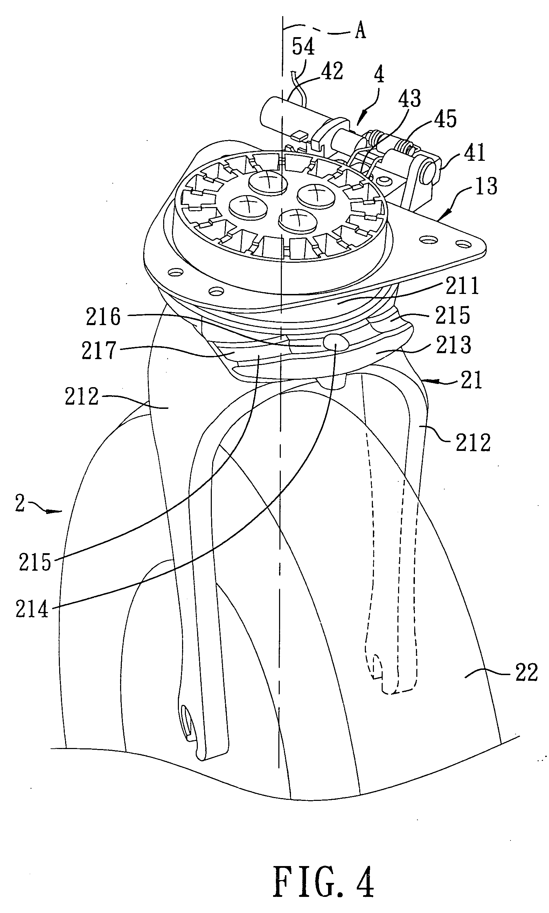

Referring to Figs. 2, 3, and 4, the wheel unit 2 is disposed under the mounting seat 13, and includes a wheel-supporting member 21 connected pivotally to the mounting seat 13, and a front wheel 22 connected rotatably to the wheel-supporting member 21. The wheel-supporting member 21 is rotatable relative to the mounting seat 13 about a rotating axis (A) (see Fig. 4), and includes a top plate 211, two fork legs 212 disposed under and connected fixedly to the top plate 211, and a projecting plate 213 extending integrally and outwardly from a periphery of the top plate 211. The projecting plate 213 has a top surface that is formed with a limiting hole 214 and two guide slots 215 which are located on two opposite sides of the limiting hole 214, that are communicated with the limiting hole 214, and that extend along a circumferential direction of the rotating axis (A) . The hole 134 in the mounting plate 133 of the mounting seat 13 is located above the limiting hole 214 in the projecting plate 213. Each of the guide slots 215 has a high end 216 proximate to the limiting hole 214, and a low end 217 distal from the limiting hole 214.

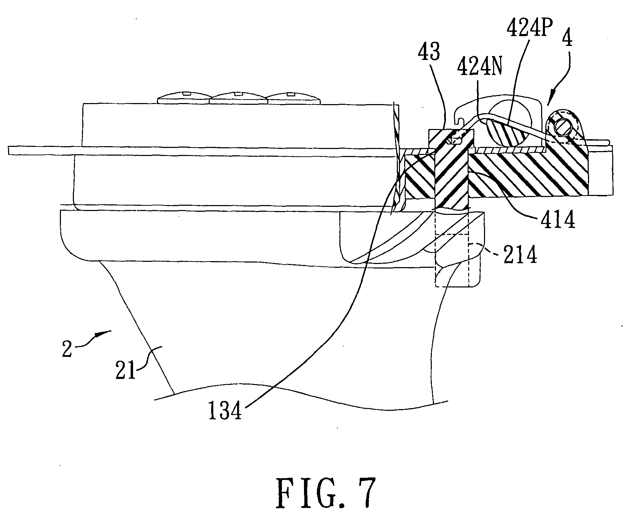

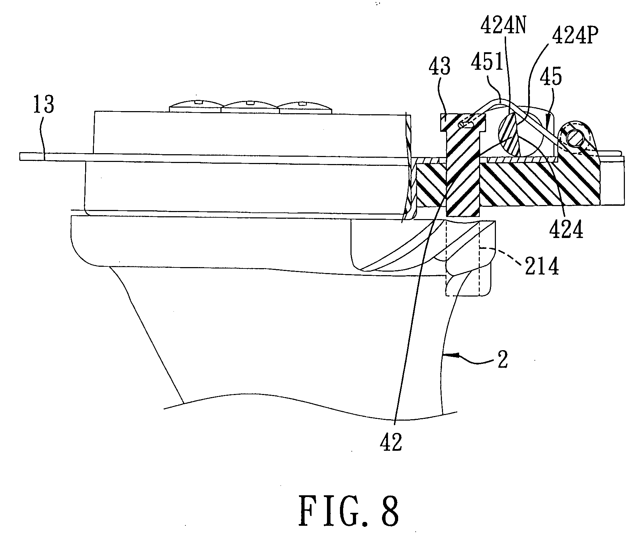

The direction-limiting device 4 includes a base 41, a controlling element 42, a direction-limiting element 43, a pivot pin 44, and a biasing member 45. The base 41 is disposed under and is fixed on the mounting plate 133 of the mounting seat 13, and has an integral stop element 410, a top surface 411 that is formed with two spaced-apart integral upright walls 412 and an integral projection 413 that extends into the notch 135 in the mounting plate 133 of the mounting seat 13, and a hole 414 formed through the base 41 and aligned with the hole 134 in the mounting plate 133 along a vertical direction. The controlling element 42 is configured as a rod that has a circular cross-section, is journalled on the upright walls 412 between the projection 413 and the direction-limiting element 43, and includes a positioning tongue 420 extending integrally, radially, and outwardly therefrom, a driven end 422 with a cord-connecting element 423, and a recess (R) to define a thinner rod portion 424 that has a planar surface (424P) (see Fig. 7) and a curved surface (424N) (see Fig. 7) . The direction-limiting element 43 extends through the hole 414 in the base 41, and is moved relative to the mounting seat 13 between a limiting position shown in Fig. 7, where the positioning tongue 420 of the controlling element 42 abuts against the stop element 410 of the base 41 and where the direction-limiting element 43 is inserted into the limiting hole 214 in the wheel-supporting member 21 so as to prevent rotation of the wheel-supporting member 21 relative to the stroller frame 1, and a release position shown in Fig. 8, where the direction-limiting element 43 is removed from the limiting hole 214 in the wheel-supporting member 21 so as to permit the rotation of the wheel-supporting member 21 relative to the stroller frame 1. The guide slots 215 in the wheel-supporting member 21 can guide a lower end of the direction-limiting element 43 to move into the limiting hole 214 in the wheel-supporting member 21. The biasing member 45 is mounted rotatably on the projection 413 by the pivot pin 44, and is formed with two resilient pressing arms 451 that have free ends inserted respectively into and rotatable within two aligned holes 432 in an upper end of the direction-limiting element 43 and that press the thinner rod portion 424 of the controlling member 42 against the top surface 411 of the base 41. As such, the biasing member 45 can bias the direction-limiting element 43 to move downwardly to the limiting position.

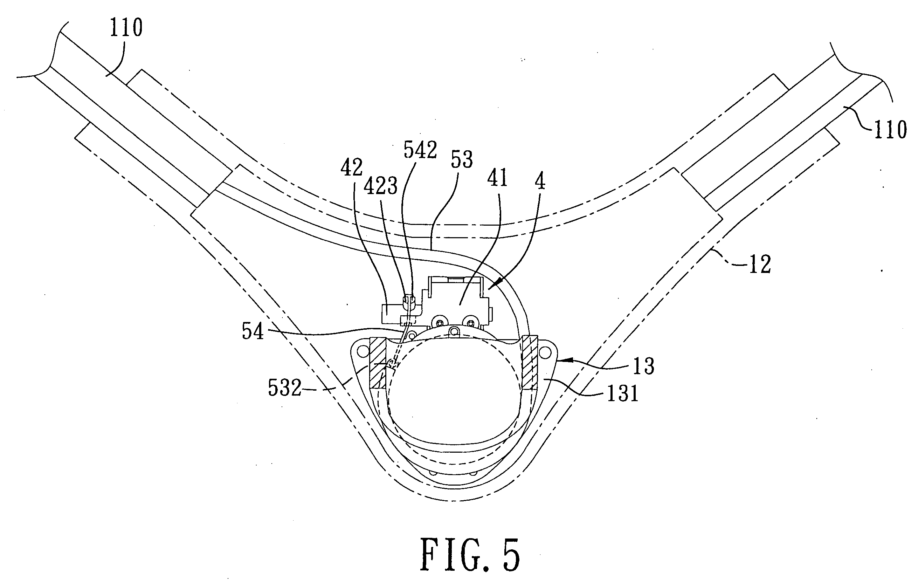

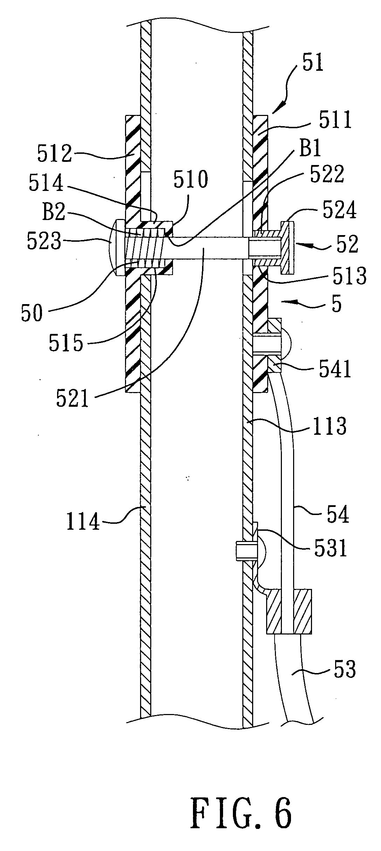

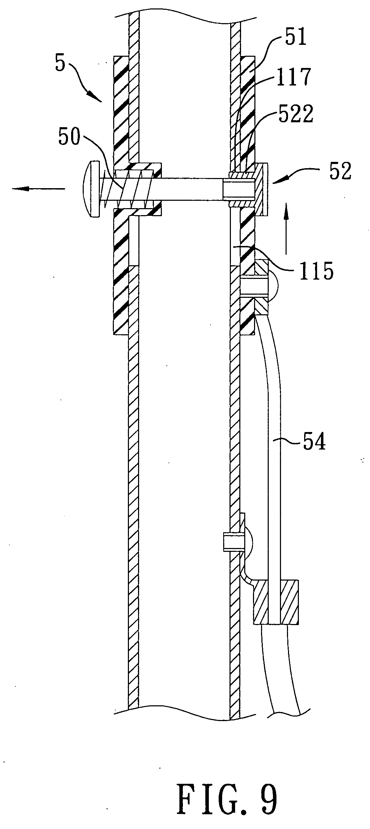

Referring to Figs. 2, 3, 5, and 6, the control device 5 includes a coiled compression spring 50, an adjusting member 51, an anchor rod 52, a tube 53, and a pull cord 54. The adjusting member 51 is sleeved movably around an upper portion of the right wheel rod 110, as shown in Fig. 1, is movable along a longitudinal direction of the right wheel rod 110 between a lower limit position shown in Fig. 6 and an upper limit position shown in Fig. 9, and has inner and outer plate portions 511, 512 that abut respectively against outer surfaces of the inner and outer walls 113, 114 of the right wheel rod 110. The inner plate portion 511 is formed with a circular hole 13 therethrough. The outer plate portion 512 is formed with a hollow cylindrical protrusion 514 that defines a counterbore 515 and that has an annular end wall 510. The hollow cylindrical protrusion 514 is received slidably within the slide slot 118 in the outer wall 114 of the right wheel rod 110. The counterbore 515 has a small-diameter bore portion (B1) proximate to the inner plate portion 511, and a large-diameter bore portion (B2) distal from the inner plate portion 511 and having a diameter larger than that of the small-diameter bore portion (B1).

The anchor rod 52 is received slidably within the positioning hole 115 in the right wheel rod 110, and includes a small-diameter rod portion 521 and a large-diameter rod portion 522. The small-diameter rod portion 521 extends through the counterbore 515 in the outer plate portion 512 of the adjusting member 51. The large-diameter rod portion 522 has a diameter which is slightly smaller than that of the circular upper slot portion 117 of the positioning slot 115 in the right wheel rod 110 and which is larger than that of the small-diameter rod portion 521 and the width of the uniform-diameter lower slot portion 116 of the positioning slot 115 in the right wheel rod 110. The small-diameter rod portion 521 has an externally threaded inner end that engages an internally threaded inner end of the large-diameter rod portion 522. Each of the small-diameter and large-diameter rod portions 521, 522 has an outer end that is formed with an outward flange 523, 524 which extends radially and outwardly therefrom and which is disposed outwardly of the adjusting member 51. The coiled compression spring 50 is sleeved around the small-diameter rod portion 521 of the anchor rod 52 between the end wall 510 of the hollow cylindrical protrusion 514 and the outward flange 523 of the small-diameter rod portion 521 of the anchor rod 52.

The tube 53 has an upper end that is formed with a lug 531 connected threadedly to the right wheel rod 110, an intermediate portion extending into the right wheel rod 110, a lower portion 532 extending from a lower end of the right wheel rod 110 and connected fixedly to and disposed under the mounting seat 13, and a lower end that is formed with a lug 532 connected fixedly to the mounting seat 13.

The pull cord 54 has an upper end 541 that is fastened to the adjusting member 51, and a lower end 542 that is fastened to the cord-connecting element 423 of the controlling element 42. As such, when the adjusting member 51 moves along the right wheel rod 110, the controlling element 42 is rotated relative to the base 41 so as to move the free ends of the pressing arms 451 of the biasing member 45 toward and away from the top surface 411 of the base 41, thereby moving the direction-limiting element 43 between the limiting position and the release position.

When the adjusting member 51 is disposed at the lower limit position shown in Fig. 6, the small-diameter rod portion 521 of the anchor rod 52 is disposed at a lower end of the uniform-diameter lower slot portion 116 of the positioning slot 115 in the right wheel rod 110 so that the pressing arms 451 abut against the planar surface (242P) of the thinner rod portion 242 of the anchor rod 24, thereby moving the direction-limiting element 43 to the limiting position shown in Fig. 7. At this time, because the controlling element 42 is retained at the position shown in Fig. 7 by the biasing member 45 so as to prevent upward movement of the pull cord 53, the adjusting member 51 is retained at the lower limit position. As such, the wheel-supporting member 21 cannot rotate relative to the mounting seat 13 so as to prevent change of the direction of the front wheel 22.

When the adjusting member 51 is moved from the lower limit position to the upper limit position shown in Fig. 9 so that the small-diameter rod portion 521 of the anchor rod 52 moves into the circular upper slot portion 117 of the positioning slot 115 in the right wheel rod 110, the coiled compression spring 50 biases the outward flange 524 of the large-diameter rod portion 522 of the anchor rod 52 to press against an outer surface of the inner plate portion 511 of the adjusting member 51 so as to move the large-diameter rod portion 522 of the anchor rod 52 into the circular upper slot portion 117 of the positioning slot 115. Because the large-diameter rod portion 522 of the anchor rod 52 engages fittingly within the circular upper slot portion 117 of the positioning slot 115, the adjusting member 51 can be retained at the upper limit position. As such, the pressing arms 451 are removed from the planar surface (242P) of the thinner rod portion 242 of the anchor rod 24 so as to move the direction-limiting element 43 to the release position shown in Fig. 8, thereby permitting change of the direction of the front wheel 22.

When it is desired to move the adjusting member 51 from the upper limit position to the lower limit position, it is only necessary to move forcibly the outward flange 523 of the small-diameter rod portion 521 of the anchor rod 52 toward an outer surface of the outer plate portion 512 of the adjusting member 51 against the biasing action of the coiled compression spring 50 so as to remove the large-diameter rod portion 522 of the anchor rod 52 from the positioning slot 115 in the right wheel rod 110.

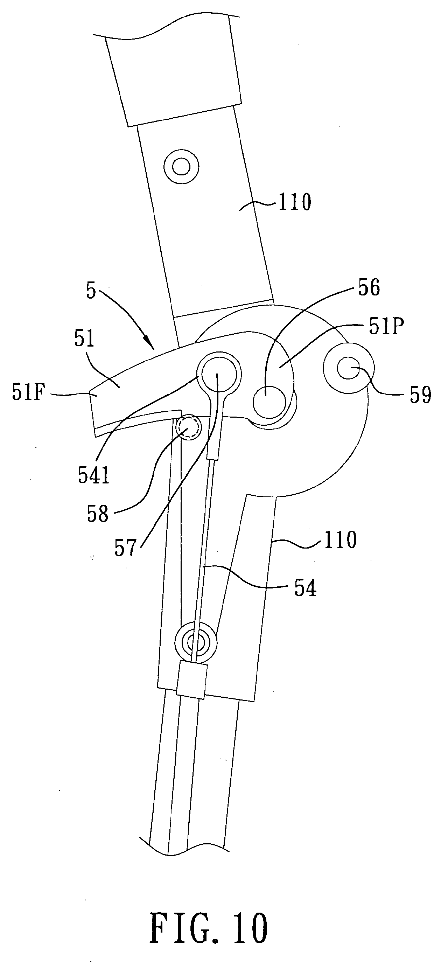

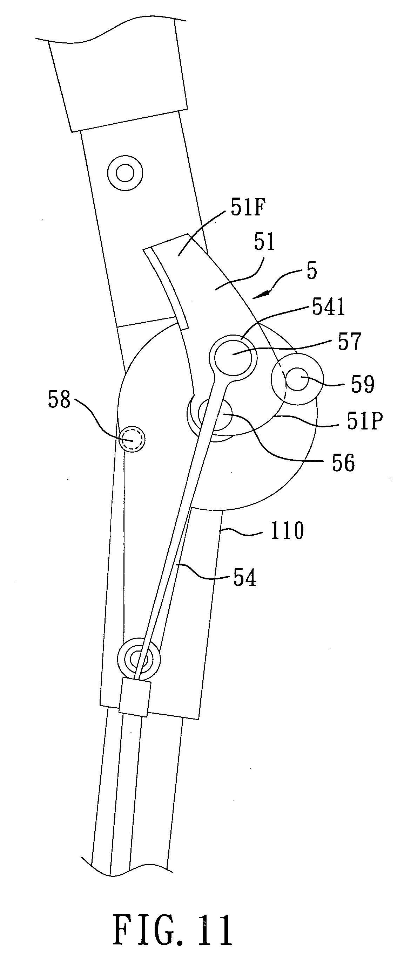

Referring to Figs. 10 and 22, a modified control device 5 is shown to include an adjusting member 51 configured as a swing lever and having a pivot end (51P) that is connected rotatably to the right wheel rod 110 by a pivot pin 56. The pull cord 54 has an upper end 541 that is connected rotatably to the adjusting member 51 by a pivot pin 57 at a location between the pivot end (51P) and the free end (51F) of the adjusting member 51. The modified control device 5 further includes a pair of first and second stop rods 58, 59 that are connected fixedly to the right wheel rod 110. The adjusting member 51 is swingable between the first and second stop rods 58, 59. As such, the adjusting member 51 is rotatable relative to the right wheel rod 110 between a first position shown in Fig. 10, where the adjusting member 51 abuts against the first stop rod 58 and where the direction-limiting element 43 is disposed at the limiting position, and a second position shown in Fig. 11, where the adjusting member 51 abuts against the second stop rod 59 and where the direction-limiting element 43 is disposed at the release position.

Because the adjusting member 51 is disposed at the upper portion of the right wheel rod 110, there is no need for the user to bend when he or she is operating the adjusting member 51. Thus, the object of this invention can be achieved.

## Claims

1. A stroller comprising:
a stroller frame (1) including a handle unit (11) and a mounting seat (13) disposed below and connected fixedly to the handle unit (11);
a wheel unit (2) disposed under the mounting seat (13) and including a wheel-supporting member (21) that is connected pivotally to the mounting seat (13) and that has a limiting hole (214), and a wheel (22) that is connected rotatably to the wheel-supporting member (21) ;
a direction-limiting device (4) including a direction-limiting element (43) movable relative to the mounting seat (13) between a limiting position, where the direction-limiting element (43) is inserted into the limiting hole (214) in the wheel-supporting member (21) of the wheel unit (2) so as to prevent rotation of the wheel-supporting member (21) of the wheel unit (2) relative to the stroller frame (1), and a release position, where the direction-limiting element (43) is removed from the limiting hole (214) in the wheel-supporting member (21) of the wheel unit (2) so as to permit the rotation of the wheel-supporting member (21) of the wheel unit (2) relative to the stroller frame (1); and
a control device (5) including an adjusting member (51) disposed on an upper portion of the handle unit (11) of the stroller frame (1), and a pull cord (54) disposed between the adjusting member (51) and the direction-limiting element (43), the adjusting member (51) being operable to move the direction-limiting element (43) between the limiting position and the release position.

2. The stroller as claimed in Claim 1, wherein the mounting seat (13) is formed with an integral mounting plate (133) that has a hole (134) which is formed therethrough and which is located above the limiting hole (214) in the wheel-supporting member (21) of the wheel unit (2), the direction-limiting element (43) extending through the hole (134) in the mounting plate (133) of the mounting seat (13).

3. The stroller as claimed in Claim 1, wherein the direction-limiting device (4) further includes a biasing member (45) for biasing the direction-limiting element (43) to move downwardly to the limiting position, and a controlling element (42) rotatable relative to the mounting seat (13) to move the direction-limiting element (43) between the limiting position and the release position.

4. The stroller as claimed in Claim 3, wherein the direction-limiting device (4) further includes a base (41) fixed on the mounting plate (133) of the mounting seat (13) and having a top surface (411) that is formed with an integral projection (413) and two spaced-apart integral upright walls (412), the biasing member (45) being mounted rotatably on the projection (413) and being formed with two resilient pressing arms (451) that have free ends (51F) which are connected rotatably to an upper end of the direction-limiting element (43), the controlling element (42) being journalled on the upright walls (412) between the projection (413) and the direction-limiting element (43) and being configured as a rod that has a circular cross-section and a recess (R) to define a thinner rod portion (424) , the pressing arms (451) of the biasing member (45) pressing the thinner rod portion (424) of the controlling element (42) against the top surface (411) of the base (41), the control device (5) being operable to rotate the controlling element (42) relative to the base (41) so as to move the free ends (51F) of the pressing arms (451) of the biasing member (45) toward and away from the top surface (411) of the base (41) of the direction-limiting device (4), thereby moving the direction-limiting element (43) between the limiting position and the release position.

5. The stroller as claimed in Claim 4, wherein the handle unit (11) includes a pair of aligned left and right wheel rods (110) , the mounting seat (13) being disposed below and connected fixedly to the left and right wheel rods (110), the adjusting member (51) being disposed movably on one of the left and right wheel rods (110) and being movable along a longitudinal direction of the one of the left and right wheel rods (110) , the pull cord (54) having an upper end (541) that is fastened to the adjusting member (51), and a lower end (542) that is fastened to the controlling element (42) so as to rotate the controlling element (42) when the adjusting member (51) moves along the one of the left and right wheel rods (110) .

6. The stroller as claimed in Claim 5, wherein the one of the left and right wheel rods (110) is formed with a positioning slot (115) that has a circular upper slot portion (117) and a uniform-diameter lower slot portion (116) which has an upper end coupled with a lower end of the circular upper slot portion (117), and a width smaller than a diameter of the circular upper slot portion (117) , the control device (5) further including a spring-loaded anchor rod (52) that is received slidably within the positioning slot (115) in the one of the left and right wheel rods (110) and that includes a small-diameter rod portion (521), and a large-diameter rod portion (522) having a diameter which is slightly smaller than that of the circular upper slot portion (117) of the positioning slot (115) in the one of the left and right wheel rods (110) and which is larger than that of the small-diameter rod portion (521) and the width of the uniform-diameter lower slot portion (116) of the positioning slot (115) in the one of the left and right wheel rods (110) , the adjusting member (51) being movable relative to the one of the left and right wheel rods (110) between a lower limit position, where the direction-limiting element (43) is disposed at the limiting position and where the small-diameter rod portion (521) of the anchor rod (52) is disposed at a lower end of the uniform-diameter lower slot portion (116) of the positioning slot (115) in the one of the left and right wheel rods (110) , and an upper limit position, where the direction-limiting element (43) is disposed at the release position and where the large-diameter rod portion (522) of the anchor rod (52) engages fittingly the circular upper slot portion (117) of the positioning slot (115) in the one of the left and right wheel rods (110).

7. The stroller as claimed in Claim 6, wherein the small-diameter rod portion (521) of the anchor rod (52) has an externally threaded inner end and an outer end that is formed with an outward flange (523) which extends radially and outwardly therefrom and which is disposed outwardly of the adjusting member (51), the large-diameter rod portion (522) of the anchor rod (52) having an internally threaded inner end that engages the externally threaded inner end of the small-diameter rod portion (521) of the anchor rod (52), and an outer end that is formed with an outward flange (524) which extends radially and outwardly therefrom and which is disposed outwardly of the adjusting member (51).

8. The stroller as claimed in Claim 7, wherein the one of the left and right wheel rods (110) is tubular, has an upper portion, and is formed with opposite inner and outer walls (113, 114) that are parallel to each other, each of the inner and outer walls (113, 114) having an outer surface, the positioning slot (115) being formed through the inner wall (113), the outer wall (114) being formed with a slide slot (118) therethrough, the adjusting member (51) being sleeved movably around the upper portion of the one of the left and right wheel rods (110) and having inner and outer plate portions (511, 512) that abut respectively against the outer surfaces of the inner and outer walls (113, 114), the inner plate portion (511) being formed with a circular hole (513) therethrough, the outer plate portion (512) being formed with a hollow cylindrical protrusion (514) that defines a counterbore (515) and that has an annular end wall (510), the hollow cylindrical protrusion (514) being received slidably within the slide slot (118) in the outer wall (114) of the one of the left and right wheel rods (110), the counterbore (515) having a small-diameter bore portion (B1) proximate to the inner plate portion (511) , and a large-diameter bore portion (B2) distal from the inner plate portion (511) and having a diameter larger than that of the small-diameter bore portion (B1) , the small-diameter rod portion (521) of the anchor rod (52) extending through the counterbore (515) in the outer plate portion (512), each of the inner and outer plate portions (511, 512) having an outer surface, the control device (5) further including a coiled compression spring (50) that is sleeved around the small-diameter rod portion (521) of the anchor rod (52) between the end wall (510) of the hollow cylindrical protrusion (514) and the outward flange (523) of the small-diameter rod portion (521) of the anchor rod (52) so as to bias the outward flange (524) of the large-diameter rod portion (522) of the anchor rod (52) to press against the outer surface of the inner plate portion (511) of the adjusting member (51), thereby engaging the large-diameter rod portion (522) of the anchor rod (52) with the circular upper slot portion (117) of the positioning slot (115) in the inner wall (113) of the one of the left and right wheel rods (110) when the adjusting member (51) is disposed at the upper limit position, the outward flange (523) of the small-diameter rod portion (521) of the anchor rod (52) being movable forcibly toward the outer surface of the outer plate portion (512) of the adjusting member (51) against biasing action of the coiled compression spring (50) so as to remove the large-diameter rod portion (522) of the anchor rod (52) from the circular upper slot portion (517) of the positioning hole (515) in the inner wall (113), thereby permitting the small-diameter rod portion (521) of the anchor rod (52) to move from the circular upper hole portion (517) of the positioning hole (515) into the uniform-diameter lower hole portion (516) of the positioning hole (515).

9. The stroller as claimed in Claim 2, wherein the wheel-supporting member (21) of the wheel unit (2) is rotatable relative to the mounting seat (13) about a rotating axis (A), the wheel-supporting member (21) of the wheel unit (2) further having two guide slots (215) that are located on two opposite sides of the limiting hole (214) in the wheel-supporting member (21) of the wheel unit (2) , that are communicated with the limiting hole (214) in the wheel-supporting member (21) of the wheel unit (2), and that extend along a circumferential direction of the rotating axis (A) so as to guide the direction-limiting element (43) to move into the limiting hole (214) in the wheel-supporting member (21) of the wheel unit (2) when the wheel-supporting member (21) of the wheel unit (2) rotates relative to the mounting seat (13).

10. The stroller as claimed in Claim 1, wherein the adjusting member (51) is configured as a swing lever, and has a pivot end (51P) connected pivotally to the handle unit (11), and a free end (51F), the pull cord (54) having an upper end (541) that is connected pivotally to the adjusting member (51) at a location between the pivot end (51P) and the free end (51F) of the adjusting member (51), and a lower end (542) that is fastened to the controlling element (42) so as to rotate the controlling element (42) when the adjusting member (51) rotates on the handle unit (11) between first and second positions.

11. The stroller as claimed in Claim 10, wherein the control device (5) further includes a pair of first and second stop rods (58, 59) that are connected fixedly to the handle unit (11), the adjusting member (51) being swingable between the first and second stop rods (58, 59), the adjusting member (51) abutting against the first stop rod (58) when the direction-limiting element (43) is disposed at the limiting position, the adjusting member (51) abutting against the second stop rod (59) when the direction-limiting element (43) is disposed at the release position.
